# EUROPÄISCHE PATENTSCHRIFT

(11) **EP 4 309 027 B1**
(45) Veröffentlichungstag und Bekanntmachung des Hinweises auf die Patenterteilung: **25.06.2025**
(21) Anmeldenummer: 23717935.3
(22) Anmeldetag: 11.04.2023
(51) Int. Cl.: G06F 3/01, B60K 35/10, B60K 35/25, B60K 35/90

(54) **EINGABEVERFAHREN MIT HAPTISCHEM FEEDBACK UND NACHSCHWINGUNTERDRÜCKUNG SOWIE ZUGEHÖRIGE EINGABEVORRICHTUNG**
INPUT METHOD WITH HAPTIC FEEDBACK AND REVERBERATION SUPPRESSION, AND ASSOCIATED INPUT DEVICE
PROCÉDÉ D'ENTRÉE AVEC RÉTROACTION HAPTIQUE ET SUPPRESSION DE RÉVERBÉRATION, ET DISPOSITIF D'ENTRÉE ASSOCIÉ

(30) Priorität: 12.04.2022 DE 102022108877
(43) Veröffentlichungstag der Anmeldung: 24.01.2024
(73) Patentinhaber: Preh GmbH, 97616 Bad Neustadt a.d. Saale (DE)
(72) Erfinder: BODENSTEIN, Tobias, 97616 Salz (DE)
(74) Vertreter: Lohmanns, Bernard
(86) Internationale Anmeldenummer: PCT/EP2023/059408
(87) Internationale Veröffentlichungsnummer: WO 2023/198688

(56) Entgegenhaltungen:
- WO-A1-2017/034973
- US-A1- 2017 285 747
- US-A1- 2019 222 920

## Beschreibung

Die vorliegende Erfindung betrifft ein Eingabeverfahren mit haptischem Feedback und möglichst weitgehender Unterdrückung des Nachschwingens. Weiterhin betrifft die Erfindung eine Eingabevorrichtung zum Erfassen einer händischen Eingabe, mit einem Betätigungselement, das nach Erfassen einer händischen Berührung und/oder Betätigung mittels eines Aktuators zur Erzeugung des haptischen Feedbacks in Schwingung versetzt wird. Schließlich betrifft die Erfindung ferner die Verwendung der Eingabevorrichtung in einem Kraftfahrzeug.

Eingabevorrichtungen der gattungsgemäßen Art sind grundsätzlich bekannt und sind beispielsweise in der DE 2013 007 962 A1 beschrieben. Eingabevorrichtungen dienen zum Erfassen einer händischen Eingabe, die in der Regel von einem Nutzer vorgenommen wird, um der Betätigung eine Schalt- und/oder Steuerfunktion zuzuordnen. Zu diesem Zweck weist die Eingabevorrichtung in der Regel wenigstens ein Betätigungselement auf, das vom Nutzer durch Betätigung mittels einer Hand oder einem Finger betätigt werden kann. Auf diese Weise kann der Nutzer Funktionen in gewünschter Weise aktivieren und/oder deaktivieren oder eine Steuerung vornehmen. Solche Eingabevorrichtungen finden einen weiten Anwendungsbereich bei Kraftfahrzeugen, wie Personenkraftfahrzeuge oder Lastkraftfahrzeuge und dienen beispielsweise der Steuerung von Fahrzeugaggregaten.

Ein Eingabeverfahren sowie eine Eingabevorrichtung gemäß dem Oberbegriff des jeweilig zugehörigen unabhängigen Anspruchs sind aus der WO 2017/034973 A1 bekannt. Gattungsgemäße Verfahren bzw. Vorrichtungen offenbaren die US 2019/222920 A1 sowie die US 2017/285747 A1.

Es ist bekannt, das Betätigungselement mit einem Aktuator zu koppeln und hierdurch eine haptisch merkbare Rückmeldung, auch haptisches Feedback genannt, für einen die Betätigung und/oder Berührung des Betätigungselements bewirkenden Nutzer zu erzeugen.

Obwohl sich die Kopplung des Betätigungselements mit dem Aktuator bewährt hat, besteht hinsichtlich der Ausgestaltung und Realisierung des Feedbacks weiterer Verbesserungsbedarf, insbesondere wenn es darum geht ein haptisches Feedback zu erzeugen, das sich auf wenige bis eine Auslenkung insgesamt oder zumindest nach der Bestromung des Aktuators mit einem elektrischen Anregungssignal beschränkt. Es hat sich gezeigt, dass eine kurze möglichst impulsähnliche Rückmeldung bevorzugt ist, da dieses nicht nur dem Bediener eine hohe Qualitätsanmutung gibt, sondern auch die Interaktion mit dem Bedienelement eine rasche Abfolge des haptischen Feedbacks erforderlich macht, damit dem Bediener eine Zuordnung zu der vorgenommenen Bedieneingabe überhaupt möglich ist, was nicht möglich ist, wenn eine nachfolgendes haptisches Feedback in das abklingende vorhergehende haptische Feedback, wie dessen Nachschwingen fällt. Es wäre zwar möglich die schwingende Lagerung des Betätigungselements zu dämpfen. Dies ist aber nachteilig für den Energieeintrag in das schwingende System und würde bei gleicher Anregungsenergie die resultierende Auslenkung minimieren. Darüber hinaus ist die mechanische Abstimmung eines schwingenden Systems schwierig und schafft bei der Massenfertigung mit reproduzierbaren Ergebnissen erhebliche Probleme.

Es besteht somit Bedarf nach einem Eingabeverfahren sowie einer zugehörigen Eingabevorrichtung, die eine reproduzierbare Unterdrückung des Nachschwingverhaltens insbesondere unter Umgehung einer mechanischen Nachabstimmung ermöglichen.

Diese Aufgabe wird gelöst durch ein Eingabeverfahren gemäß Anspruch 1 und durch eine Eingabevorrichtung gemäß dem nebengeordneten Vorrichtungsanspruch. Vorteilhafte Ausgestaltungen sind jeweils Gegenstand der abhängigen Ansprüche. Die Beschreibung, insbesondere im Zusammenhang mit den Figuren, charakterisiert und spezifiziert die Erfindung zusätzlich.

Die Erfindung betrifft ein Eingabeverfahren mit haptischem Feedback, welches die nachfolgenden Schritte aufweist. In einem Bereitstellungsschritt erfolgt ein Bereitstellen eines um eine Ruhelage in einer Schwingungsrichtung schwingend gelagerten Betätigungselements, welchem eine Eigenmode mit einer ersten Eigenfrequenz, insbesondere in Schwingungsrichtung, zugeordnet ist. Diese ergibt sich beispielsweise aufgrund der Lagerung und/oder der Materialeigenschaften des Betätigungselements. Die Eigenfrequenz, insbesondere die Eigenfrequenz, lässt sich beispielsweise durch Vermessen der Auslenkung bei frequenzspezifischer Anregung des Betätigungselements ermitteln und ergibt sich beispielsweise u.a. aus der schwingenden Lagerung des Betätigungselements, wie aus Elastizitäts- oder Federkonstanten des wenigstens einen das Betätigungselement elastisch rückstellend lagernden Rückstellelements, der Masse des Betätigungselements und aus einer Dämpfungskonstante, die sich aus einem optional vorgesehenen Dämpfungselements und/oder dem Luftwiderstand ergibt.

Das Betätigungselement kann durch einen Hebel, aber auch durch einen Schalterknopf, einen Tastenkopf, ein Touchpad oder ein Touchscreen oder Kombinationen hiervon und/oder dergleichen ausgebildet sein.

Erfindungsgemäß wird in einem weiteren Bereitstellungsschritt ein elektrodynamischer oder piezoelektrischer Aktuator bereitgestellt, der zur schwingungsanregenden Einwirkung in Schwingungsrichtung auf das Betätigungselement und Erzeugung einer haptischen Rückmeldung vorgesehen ist. Der Aktuator stützt sich beispielsweise ausschließlich am Betätigungselement ab. Erfindungsgemäß weist der Aktuator eine freischwingend gelagerte, durch ein elektrisches Anregungssignal antreibbare Erregermasse auf, so dass dem elektrodynamischen oder piezoelektrischen Aktuator ebenfalls eine Eigenmode, hier als Aktuator-Eigenmode bezeichnet, mit einer zweiten Eigenfrequenz, insbesondere in Schwingungsrichtung, zugeordnet ist. Auch diese lässt sich am Aktuator, wie eingangs beschrieben messen, und ergibt sich im Wesentlichen aus der elastischen Lagerung der Erregermasse, beispielsweise eines die Erregermasse rückstellend lagernden Federelements und aus einer Dämpfungskonstante, die sich aus einem optional vorgesehenen Dämpfungselements und/oder dem Luftwiderstand ergibt.

Im Falle eines elektrodynamischen Aktuators wird die zweite Eigenfrequenz zusätzlich durch die elektro-magnetische Güte seines Schwingkreises beeinflusst.

Diese verschiebt nicht nur die zweite Eigenfrequenz im Vergleich zu einem rein mechanischen System, sondern verbreitert auch die Resonanzkurve um die zweite Eigenfrequenz insgesamt, so dass die Resonanz-Halbwertsbreite der Resonanzkurve zunimmt.

Erfindungsgemäß werden ferner Erfassungsmittel zum Erfassen wenigstens eines Beginns einer händischen Berührung und/oder Betätigung des Betätigungselements bereitgestellt. Die Erfassungsmittel können ganz oder teilweise in das Betätigungselement integriert sein. Als händische Berührung wird beispielsweise die Berührung mit einem Finger oder der Hand eines Bedieners oder Nutzers verstanden, während unter Betätigung das Einwirken durch eine Hand oder einen Finger unter Aufbringung einer auf das Betätigungselement einwirkenden Betätigungskraft verstanden wird.

Die Erfassungsmittel sind beispielsweise kapazitive Mittel, die die Berührung und/oder eine durch die Betätigung hervorgerufene Lageänderung des Betätigungselements oder die damit verbundene Krafteinwirkung detektieren. Beispielsweise ist die schwingende Lagerung des Betätigungselements so ausgelegt, dass das Betätigungselement im Wesentlichen senkrecht zur Betätigungsrichtung, bevorzugt parallel zu einer am Betätigungselement ausgebildeten und für eine Betätigung angeordneten Betätigungsfläche gelagert ist. Als eine um eine Ruhelage schwingende Lagerung wird eine monostabile, d.h. in die eine Ruhelage rückstellende, Lagerung des Betätigungselements verstanden.

Erfindungsgemäß wird ferner eine mit den Erfassungsmitteln elektrisch verbundene Steuereinheit vorgesehen, die ausgebildet ist, das elektrische Anregungssignal zur Anregung des Aktuators während oder nach Erfassen der Berührung und/oder Betätigung durch die Erfassungsmittel zu erzeugen.

Das erfindungsgemäße Eingabeverfahren umfasst den Schritt des Erzeugens der haptischen Rückmeldung durch die Steuereinheit, indem der elektrodynamische oder piezoelektrische Aktuator während oder nach Erfassen der Berührung und/oder Betätigung mit dem elektrischen Anregungssignal beaufschlagt wird, es also zur Anregung einer Bewegung des Betätigungselements in Schwingungsrichtung mittels des Aktuators kommt. "Während oder nach Erfassen" meint entweder die unmittelbar mit der Detektion der Betätigung einsetzende Erzeugung des Ansteuersignals oder eine zur Detektion zeitlich versetzte und nachfolgende Erzeugung.

Dieses elektrische Anregungssignal weist erfindungsgemäß ein kontinuierliches, beispielsweise durch Fourier-Transformation erhaltenes Amplitudenspektrum auf, wobei durch geeignete Auslegung des Anregungssignal dessen Amplitudenspektrum derart ausgestaltet ist, dass die erste Eigenfrequenz und die zweite Eigenfrequenz jeweils in einen ein lokales Minimum umgebenden Bandbreitenbereich des Amplitudenspektrums fallen. Beispielsweise entsprechen die erste und zweite Eigenfrequenz jeweils der Frequenz, an der das Amplitudenspektrum das lokale Minimum oder jeweils die lokalen Minima aufweist.

Dadurch, dass das Anregungssignal ein kontinuierliches und nicht diskretes Amplitudenspektrum aufweist, ist ein höherer Energieeintrag in das durch die Eingabevorrichtung definierte, schwingende Gesamtsystem ermöglicht, wovon insbesondere eine Anregung mit einem elektrodynamischen Aktuator profitiert. Dadurch, dass das Anregungssignal erfindungsgemäß so ausgelegt ist, dass die erste und zweite Eigenfrequenz jeweils in den Bandbreitenbereich um ein lokales Minimum des zugehörigen Amplitudenspektrums fallen, wird die Schwingungsanregung in dem eigenfrequenznahen Bereich unterdrückt, was insbesondere ein nachhaltiges Nachschwingen des Betätigungsteils und der Erregermasse nach dem Abfall des elektrischen Anregungssignal minimiert.

Bevorzugt ist vorgesehen, dass die erste Eigenfrequenz in einen ersten Bandbreitenbereich des Amplitudenspektrums fällt, welcher ein erstes lokales Minimum umgibt und die zweite Eigenfrequenz in eine sich nicht mit dem ersten Bandbreitenbereich überschneidenden, zweiten Bandbreitenbereich fällt, der ein zweites lokales Minimum umgibt. Dabei weisen der erste Bandbreitenbereich eine erste Bandbreite und der zweite Bandbreitenbereich eine zweite Bandbreite auf, die durch jeweilige Grenzfrequenzen, eine obere bzw. eine untere Grenzfrequenz bestimmt sind.

Bevorzugt sind die zu dem jeweiligen Bandbreitenbereich gehörigen Grenzfrequenzen beispielsweise durch eine beiderseitige, betragsmäßig 10 Hz, bevorzugter 5 Hz, betragende Abweichung von der Frequenz desjeweiligen lokalen Minimums des Amplitudenspektrums bestimmt. Bevorzugt sind zumindest die eine zweite Bandbreite des zweiten Bandbreitenbereichs definierenden Grenzfrequenzen im Amplitudenspektrums wie folgt definiert: die Grenzfrequenzen ergeben sich durch jeweils diejenige Frequenz oberhalb bzw. unterhalb des zweiten lokalen Minimums, bei dem das Amplitudenspektrum sich das erste Mal jeweils ausgehend von dem zweiten lokalen Minimum betragsmäßig um 3dB gegenüber dem des zweiten lokalen Minimums erhöht hat.

Bevorzugt ist eine durch die untere und obere Grenzfrequenz des zweiten Bandbreitenbereichs ergebende zweite Bandbreite größer als die halbe Resonanz-Halbwertsbreite des elektrodynamischen Aktuators, meist bevorzugt größer als die Resonanz-Halbwertsbreite des elektrodynamischen Aktuators und kleiner als die sechsfache Resonanz-Halbwertsbreite des elektrodynamischen Aktuators, meist bevorzugt kleiner als die vierfache Resonanz-Halbwertsbreite des elektrodynamischen Aktuators.

Bevorzugt ist der elektrodynamische Aktuator ein Tauchspulen-Aktuator, auch als "Voice-Coil-Actor" bezeichnet, der ein breiteres Frequenzansprechverhalten als ein allgemeiner linear antreibender Aktuator oder ein piezoelektrischer Aktuator aufweist. Bevorzugt weist der elektrodynamische Aktuator eine die zweite Eigenfrequenz betreffende Resonanz-Halbwertsbreite von 5 Hz oder mehr, bevorzugter von 20 Hz oder mehr, meist bevorzugt von 50 Hz oder mehr, auf.

Bevorzugt ist die Dauer des elektrischen Anregungssignals auf 30 ms, bevorzugt 25 ms, meist bevorzugt 20 ms beschränkt. Anfang und Ende des elektrischen Anregungssignal sind beispielsweise dadurch definiert, dass der Signalpegel des elektrischen Anregungssignal für mehr als 20ms keine die Messgenauigkeit übersteigende Änderung erfährt oder erfahren hat.

Bevorzugt sind das erste und zweite lokale Minimum jeweils durch einen mehr als 3 dB, bevorzugter 5 dB, ausmachenden Abfall gegenüber einer Maximalamplitude im Amplitudenspektrum definiert.

Bevorzugt sind die schwingende Lagerung des Betätigungsteils und die Lagerung der Erregermasse so abgestimmt, dass die zweite Eigenfrequenz höher ist als die erste Eigenfrequenz.

Bevorzugt liegt die erste, sich aus der Lagerung des Betätigungselements ergebende Eigenfrequenz im Bereich von 50 Hz bis 100 Hz.

Gemäß einer bevorzugten Ausgestaltung weist das Betätigungselement eine Masse im Bereich von 100 g bis 1200 g, bevorzugter im Bereich von 500 g bis 1000 g, auf.

Erfindungsgemäß ist das Anregungssignal so ausgebildet, dass der elektrodynamische oder piezoelektrische Aktuator spätestens nach dem ersten Überschwingen der Ruhelage nach Erreichen der Maximalauslenkung durch das Betätigungselement, bevorzugt zu einem Zeitpunkt, an dem nach der Maximalauslenkung erstmalig eine Auslenkung unterschritten ist, die 1/10 der Maximalauslenkung des Betätigungsteils ausmacht, stromlos gestellt wird.

Bevorzugt wird der zeitliche Verlauf des elektrischen Anregungssignals durch Filterung, wie Tiefpass-Filterung, eines pulsweitenmodulierten Ausgangssignals erzeugt.

Die Erfindung betrifft ferner eine Eingabevorrichtung mit haptischem Feedback. Diese weist ein um eine Ruhelage in einer Schwingungsrichtung schwingend gelagerten Betätigungselements, welchem eine Eigenmode mit einer ersten Eigenfrequenz, insbesondere in Schwingungsrichtung, zugeordnet ist. Diese ergibt sich beispielsweise aufgrund der Lagerung und/oder der Materialeigenschaften des Betätigungselements. Die Eigenfrequenz, insbesondere die Eigenfrequenz, lässt sich beispielsweise durch Vermessen der Auslenkung bei frequenzspezifischer Anregung des Betätigungselements ermitteln und ergibt sich beispielsweise u.a. aus der schwingenden Lagerung des Betätigungselements, wie aus Elastizitäts- oder Federkonstanten des wenigstens einen das Betätigungselement elastisch rückstellend lagernden Rückstellelements, der Masse des Betätigungselements und aus einer Dämpfungskonstante, die sich aus einem optional vorgesehenen Dämpfungselements und/oder dem Luftwiderstand ergibt.

Das Betätigungselement kann durch einen Hebel, aber auch durch einen Schalterknopf, einen Tastenkopf, ein Touchpad oder ein Touchscreen oder Kombinationen hiervon und/oder dergleichen ausgebildet sein.

Erfindungsgemäß ist ferner ein elektrodynamischer oder piezoelektrischer Aktuator vorgesehen, der zur schwingungsanregenden Einwirkung in Schwingungsrichtung auf das Betätigungselement und Erzeugung einer haptischen Rückmeldung ausgebildet und angeordnet ist. Der Aktuator stützt sich beispielsweise ausschließlich am Betätigungselement ab. Erfindungsgemäß weist der Aktuator eine freischwingend gelagerte, durch ein elektrisches Anregungssignal antreibbare Erregermasse auf, so dass dem elektrodynamischen oder piezoelektrischen Aktuator ebenfalls eine Eigenmode, hier als Aktuator-Eigenmode bezeichnet, mit einer zweiten Eigenfrequenz, insbesondere in Schwingungsrichtung, zugeordnet ist. Auch diese lässt sich am Aktuator, wie eingangs beschrieben messen, und ergibt sich im Wesentlichen aus der elastischen Lagerung der Erregermasse, beispielsweise eines die Erregermasse rückstellend lagernden Federelements und aus einer Dämpfungskonstante, die sich aus einem optional vorgesehenen Dämpfungselements und/oder dem Luftwiderstand ergibt.

Erfindungsgemäß sind ferner Erfassungsmittel zum Erfassen wenigstens eines Beginns einer händischen Berührung und/oder Betätigung des Betätigungselements vorgesehen. Die Erfassungsmittel können ganz oder teilweise in das Betätigungselement integriert sein. Als händische Berührung wird beispielsweise die Berührung mit einem Finger oder der Hand eines Bedieners oder Nutzers verstanden, während unter Betätigung das Einwirken durch eine Hand oder einen Finger unter Aufbringung einer auf das Betätigungselement einwirkenden Betätigungskraft verstanden wird.

Die Erfassungsmittel sind beispielsweise kapazitive Mittel, die die Berührung und/oder eine durch die Betätigung hervorgerufene Lageänderung des Betätigungselements oder die damit verbundene Krafteinwirkung detektieren. Beispielsweise ist die schwingende Lagerung des Betätigungselements so ausgelegt, dass das Betätigungselement im Wesentlichen senkrecht zur Betätigungsrichtung, bevorzugt parallel zu einer am Betätigungselement ausgebildeten und für eine Betätigung angeordneten Betätigungsfläche gelagert ist. Als eine um eine Ruhelage schwingende Lagerung wird eine monostabile, d.h. in die eine Ruhelage rückstellende, Lagerung des Betätigungselements verstanden.

Erfindungsgemäß ist ferner eine mit den Erfassungsmitteln elektrisch verbundene Steuereinheit vorgesehen, die ausgebildet ist, das elektrische Anregungssignal zur Anregung des Aktuators während oder nach Erfassen der Berührung und/oder Betätigung durch die Erfassungsmittel zu erzeugen. "Während oder nach Erfassen" meint entweder die unmittelbar mit der Detektion der Betätigung einsetzende Erzeugung des Ansteuersignals oder eine zur Detektion zeitlich versetzte und nachfolgende Erzeugung.

Dieses elektrische Anregungssignal weist erfindungsgemäß ein kontinuierliches, beispielsweise durch Fourier-Transformation erhaltenes Amplitudenspektrum auf, wobei durch geeignete Auslegung des Anregungssignal dessen Amplitudenspektrum derart ausgestaltet ist, dass die erste Eigenfrequenz und die zweite Eigenfrequenz jeweils in einen ein lokales Minimum umgebenden Bandbreitenbereich des Amplitudenspektrums fallen. Beispielsweise entsprechen die erste und zweite Eigenfrequenz jeweils der Frequenz, an der das Amplitudenspektrum das lokale Minimum oder jeweils die lokalen Minima aufweist.

Dadurch, dass das Anregungssignal ein kontinuierliches und nicht diskretes Amplitudenspektrum aufweist, ist ein höherer Energieeintrag in das durch die Eingabevorrichtung definierte, schwingende Gesamtsystem ermöglicht, wovon insbesondere eine Anregung mit einem elektrodynamischen Aktuator profitiert. Dadurch, dass das Anregungssignal erfindungsgemäß so ausgelegt ist, dass die erste und zweite Eigenfrequenz jeweils in den Bandbreitenbereich um ein lokales Minimum des zugehörigen Amplitudenspektrums fallen, wird die Schwingungsanregung in dem eigenfrequenznahen Bereich unterdrückt, was insbesondere ein nachhaltiges Nachschwingen des Betätigungsteils und der Erregermasse nach dem Abfall des elektrischen Anregungssignal minimiert.

Bevorzugt ist vorgesehen, dass die erste Eigenfrequenz in einen ersten Bandbreitenbereich des Amplitudenspektrums fällt, welcher ein erstes lokales Minimum umgibt und die zweite Eigenfrequenz in eine sich nicht mit dem ersten Bandbreitenbereich überschneidenden, zweiten Bandbreitenbereich fällt, der ein zweites lokales Minimum umgibt. Dabei weisen der erste Bandbreitenbereich eine erste Bandbreite und der zweite Bandbreitenbereich eine zweite Bandbreite auf, die durch jeweilige Grenzfrequenzen, eine obere bzw. eine untere Grenzfrequenz bestimmt sind.

Bevorzugt sind die zu dem jeweiligen Bandbreitenbereich gehörigen Grenzfrequenzen beispielsweise durch eine beiderseitige, betragsmäßig 10 Hz, bevorzugter 5 Hz, betragende Abweichung von der Frequenz desjeweiligen lokalen Minimums des Amplitudenspektrums bestimmt. Bevorzugt sind zumindest die eine zweite Bandbreite des zweiten Bandbreitenbereichs definierenden Grenzfrequenzen im Amplitudenspektrums wie folgt definiert: die Grenzfrequenzen ergeben sich durch jeweils diejenige Frequenz oberhalb bzw. unterhalb des zweiten lokalen Minimums, bei dem das Amplitudenspektrum sich das erste Mal jeweils ausgehend von dem zweiten lokalen Minimum betragsmäßig um 3dB gegenüber dem des zweiten lokalen Minimums erhöht hat.

Bevorzugt ist eine durch die untere und obere Grenzfrequenz des zweiten Bandbreitenbereichs ergebende zweite Bandbreite größer als die halbe Resonanz-Halbwertsbreite des elektrodynamischen Aktuators, meist bevorzugt größer als die Resonanz-Halbwertsbreite des elektrodynamischen Aktuators und kleiner als die sechsfache Resonanz-Halbwertsbreite des elektrodynamischen Aktuators, meist bevorzugt kleiner als die vierfache Resonanz-Halbwertsbreite des elektrodynamischen Aktuators.

Bevorzugt ist der elektrodynamische Aktuator ein Tauchspulen-Aktuator, auch als "Voice-Coil-Actor" bezeichnet, der ein breiteres Frequenzansprechverhalten als ein allgemeiner linear antreibender Aktuator oder ein piezoelektrischer Aktuator aufweist. Bevorzugt weist der elektrodynamische Aktuator eine die zweite Eigenfrequenz betreffende Resonanz-Halbwertsbreite von 5 Hz oder mehr, bevorzugter von 20 Hz oder mehr, meist bevorzugt von 50 Hz oder mehr, auf.

Bevorzugt ist die Dauer des elektrischen Anregungssignals auf 30 ms, bevorzugt 25 ms, meist bevorzugt 20 ms beschränkt. Anfang und Ende des elektrischen Anregungssignal sind beispielsweise dadurch definiert, dass der Signalpegel des elektrischen Anregungssignal für mehr als 20ms keine die Messgenauigkeit übersteigende Änderung erfährt oder erfahren hat.

Bevorzugt sind das erste und zweite lokale Minimum jeweils durch einen mehr als 3 dB, bevorzugter 5 dB, ausmachenden Abfall gegenüber einer Maximalamplitude im Amplitudenspektrum definiert.

Bevorzugt sind die schwingende Lagerung des Betätigungsteils und die Lagerung der Erregermasse so abgestimmt, dass die zweite Eigenfrequenz höher ist als die erste Eigenfrequenz.

Bevorzugt liegt die erste, sich aus der Lagerung des Betätigungselements ergebende Eigenfrequenz im Bereich von 50 Hz bis 100 Hz.

Gemäß einer bevorzugten Ausgestaltung weist das Betätigungselement eine Masse im Bereich von 100 g bis 1200 g, bevorzugter im Bereich von 500 g bis 1000 g, auf.

Erfindungsgemäß ist das Anregungssignal so ausgebildet, dass der elektrodynamische oder piezoelektrische Aktuator spätestens nach dem ersten Überschwingen der Ruhelage nach Erreichen der Maximalauslenkung durch das Betätigungselement, bevorzugter zu einem Zeitpunkt, an dem nach der Maximalauslenkung erstmalig eine Auslenkung unterschritten ist, die 1/10 der Maximalauslenkung des Betätigungsteils ausmacht, stromlos gestellt wird.

Gemäß einer bevorzugten Ausgestaltung ist die Steuereinheit ausgebildet, den zeitlichen Verlauf des elektrischen Anregungssignals durch Filterung, wie Tiefpass-Filterung, eines pulsweitenmodulierten Ausgangssignals zu erzeugen.

Die Erfindung betrifft ferner die gleichermaßen vorteilhafte Verwendung der Eingabevorrichtung gemäß einer der zuvor beschriebenen Ausführungsformen in einem Kraftfahrzeug. Beispielsweise ist die Eingabevorrichtung in einem Lenkrad, beispielsweise in einer den Lenkradkranz tragenden Lenkradspeiche angeordnet. In einer anderen Ausgestaltung ist die Eingabevorrichtung an einem Armaturenbrett oder einer Innenverkleidung des Kraftfahrzeugs befestigt.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Figur 1: eine Schnittansicht durch eine erfindungsgemäße Eingabevorrichtung (1);
- Figur 2a: ein mechanisches Ersatzschaubild für die in Figur 1 gezeigte Eingabevorrichtung;
- Figur 2b: ein Ersatzschaubild für die in Figur 1 gezeigte Eingabevorrichtung mit mechanischen und elektro-magnetischen Komponenten, wie es insbesondere beim elektrodynamischen Aktuator der Fall ist;
- Figur 3a: das Schwingungsverhalten einer nicht erfindungsgemäßen Eingabevorrichtung;
- Figur 3b: ein aus dem Schwingungsverhalten der nicht erfindungsgemäßen Eingabevorrichtung ermitteltes Amplitudenspektrum;
- Figur 4: eine Darstellung des bei der erfindungsgemäßen Eingabevorrichtung der Figuren 1 und 2 verwendeten, elektrischen Anregungssignals S(t) und des daraus durch schnelle Fourier-Transformation (FFT) erhaltenen Amplitudenspektrums FFT(S(t));
- Figur 5a: das Schwingungsverhalten der erfindungsgemäßen Eingabevorrichtung 1;
- Figur 5b: ein aus dem Schwingungsverhalten der erfindungsgemäßen Eingabevorrichtung 1 ermitteltes Amplitudenspektrum.

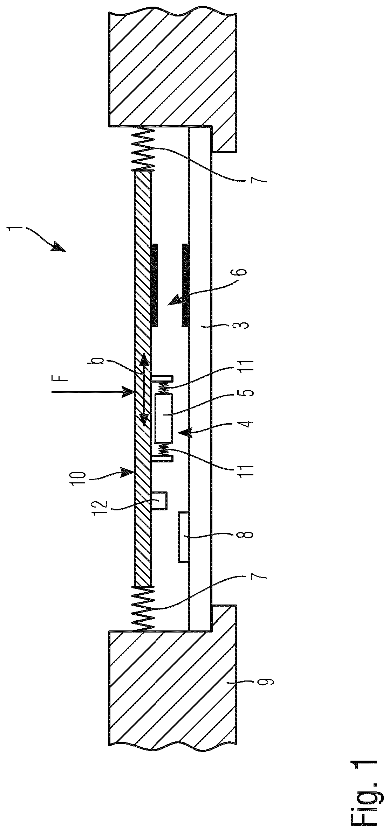

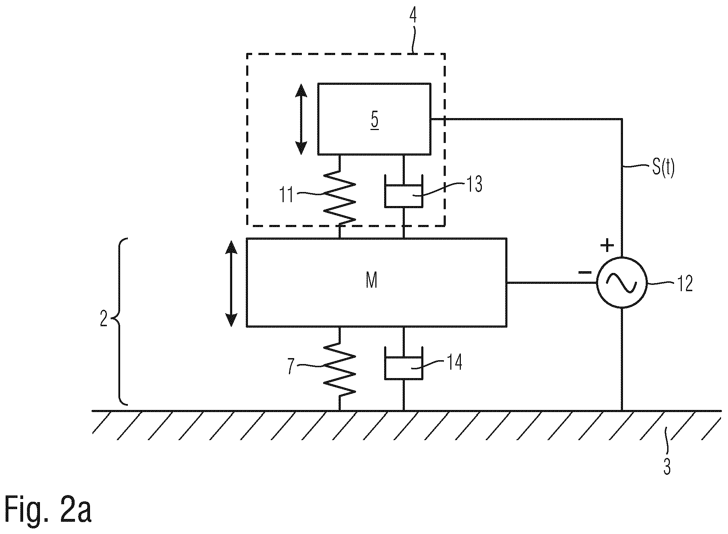

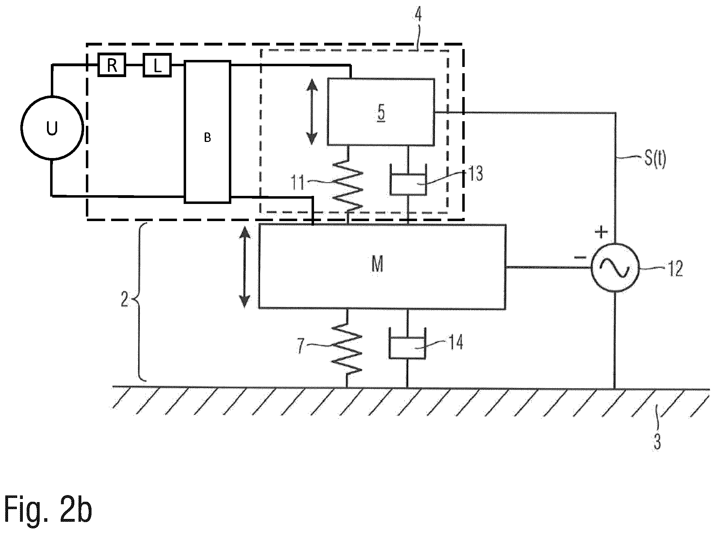

Figur 1 zeigt eine Ausführungsform der erfindungsgemäßen Eingabevorrichtung 1. Diese ist ausgelegt, das erfindungsgemäße Eingabeverfahren durchzuführen, wie es anhand der nachfolgenden Figuren 2, 4, 5a und 5b beschrieben wird. Die erfindungsgemäße Eingabevorrichtung 1 weist einen Träger 3 auf, der mit einer Innenverkleidung 9 eines Kraftfahrzeugs starr verbunden ist. An dem Träger 3 ist ein Betätigungselement 2 mittels elastischen Rückstellelementen 7, wie Federn oder elastomerer Lagermittel, beweglich gelagert. Die elastischen Rückstellmittel 7 gewährleisten eine in eine Ruhestellung rückstellende Lagerung des Betätigungselements 2 entlang der Schwingungsrichtung b. Das Betätigungselement 2 definiert eine Betätigungsfläche 10. Bei Einwirken einer durch einen nicht dargestellten Bediener, auch Nutzer genannt, aufgebrachten Betätigungskraft F auf die Betätigungsfläche 10 kommt es zu einer der rückstellenden Wirkung der Federn 7 entgegengerichteten Verlagerung des Betätigungselements 2 in Richtung des Trägers 3, die im vorliegenden Fall senkrecht zur Schwingungsrichtung b ist. Es sind ferner andere Ausgestaltungen denkbar, bei denen die Schwingungsrichtung b und die Betätigungsrichtung zusammenfallen. Es sind Erfassungsmittel 6, 8 zur Erfassung einer Betätigung des Betätigungselements 2 in Form eines kapazitiven, d.h. eine Messkapazität ausbildenden, Kraftsensors 6 vorgesehen, die bei Überschreiten einer Mindestannäherung eine Betätigung positiv detektieren. Diese Betätigung soll bei der erfindungsgemäßen Eingabevorrichtung 1 durch eine haptische Rückmeldung dem Bediener bestätigt werden. Dazu ist ein elektrodynamischer Aktuator 4 in Form eines Tauchspulenaktuators vorgesehen, der ausschließlich am Betätigungselement 2 gelagert ist und einen am Betätigungselement 2 befestigten Permanentmagneten aufweist, in dessen Feld eine Erregermasse 5 mit einer elektrischen Spule eintaucht und freischwingend durch Federn 11 entlang einer zur Schwingungsrichtung b parallelen Richtung gelagert ist. Durch Beaufschlagen des elektrodynamischen Aktuators 5 mit einem durch eine Steuereinheit 12 erzeugten elektrischen Anregungssignal S(t) kommt es zur Schwingungsanregung der Erregermasse 5, deren Schwingung sich auf das Betätigungselement 2 überträgt. Der Aktuator 4 ist vorgesehen, das Betätigungselement 2 in einer zur Betätigungsfläche 10 parallelen Schwingungsrichtung b in Schwingung zu versetzen. Diese Schwingung wird von dem Bediener als haptisches Feedback haptisch wahrgenommen uns soll möglichst nach dem stromlos Stellen des elektrodynamischen Aktuator 4 rasch abklingen. Dazu wird die Spule des Aktuators 4 entsprechend durch eine auf dem Träger 3 angeordnete Steuereinheit 8 mit einem elektrischen Anregungssignal bzw. Bremssignal bestromt. Diese Bestromung der Spule des Aktuators 4 erfolgt nach Detektion einer Betätigung durch den Kraftsensor 6, um eine Schwingung des Betätigungselements 2 in Schwingungsrichtung b anzuregen. Das sich aus der jeweiligen schwingenden Lagerung und gegebenenfalls den Materialeigenschaften ergebende mechanische Ersatzschaltbild ist in Figur 2a gezeigt, wobei eine Reibungs- bzw. Dämpfungskomponente, die sich beispielsweise im Wesentlichen aus dem Luftwiderstand ergibt, durch die Symbole 13 und 14 in jedem mechanischen Schwingkreis symbolisiert ist. Figur 2b zeigt zusätzlich zum mechanischen Ersatzschaltbild das durch elektro-magnetische Wechselwirkung B beinflusste Schwingungsverhalten, welches hier durch einen einen ohmschen Widerstand R und dazu eine in Reihe geschaltete Spule L als elektrischen Schwingkreis und dessen symbolisiert ist und wodurch die die Resonanzkurve beeinflusst.

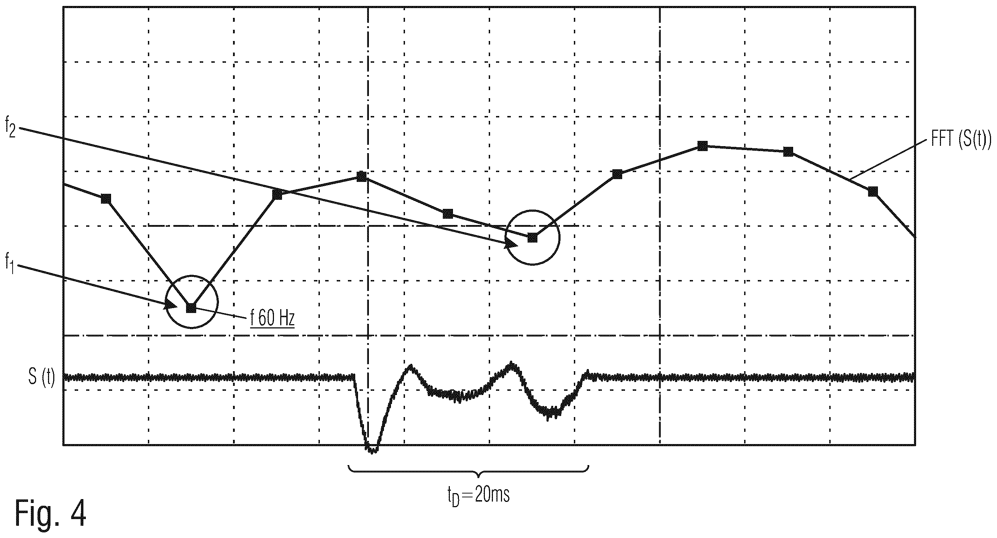

Dieses elektrische Anregungssignal S(t) weist erfindungsgemäß ein kontinuierliches, beispielsweise durch schnelle Fourier-Transformation erhaltenes Amplitudenspektrum FFT(S(t)), wie es in Figur 4 gezeigt ist, auf. Dieses ist derart ausgestaltet ist, dass die erste, dem Bedienelement 2 zugeordnete Eigenfrequenz f1 und die zweite, dem elektrodynamischen Aktuator 4 zugeordnete Eigenfrequenz f2 jeweils in einen ein lokales Minimum umgebenden Bandbreitenbereich des Amplitudenspektrums FFT(S(t)) fallen. Hier entsprechen die erste Eigenfrequenz f1 und zweite Eigenfrequenz f2 jeweils einer Frequenz, an der das Amplitudenspektrum FFT(S(t)) jeweils ein lokales Minimum aufweist, wobei diese Minima sich nicht überschneiden. Das Anregungssignal S(t) ist dabei auf eine Maximaldauer von 20 ms beschränkt.

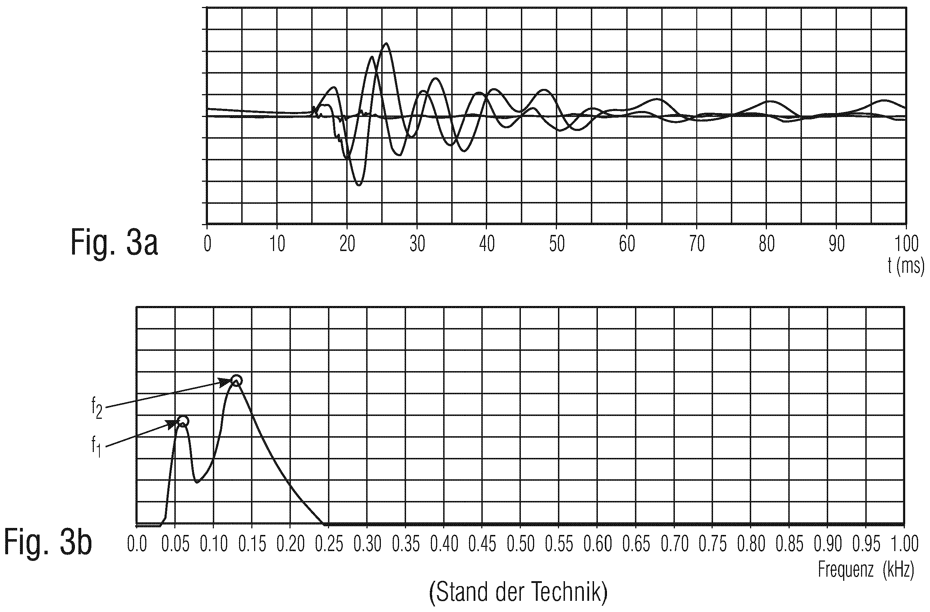

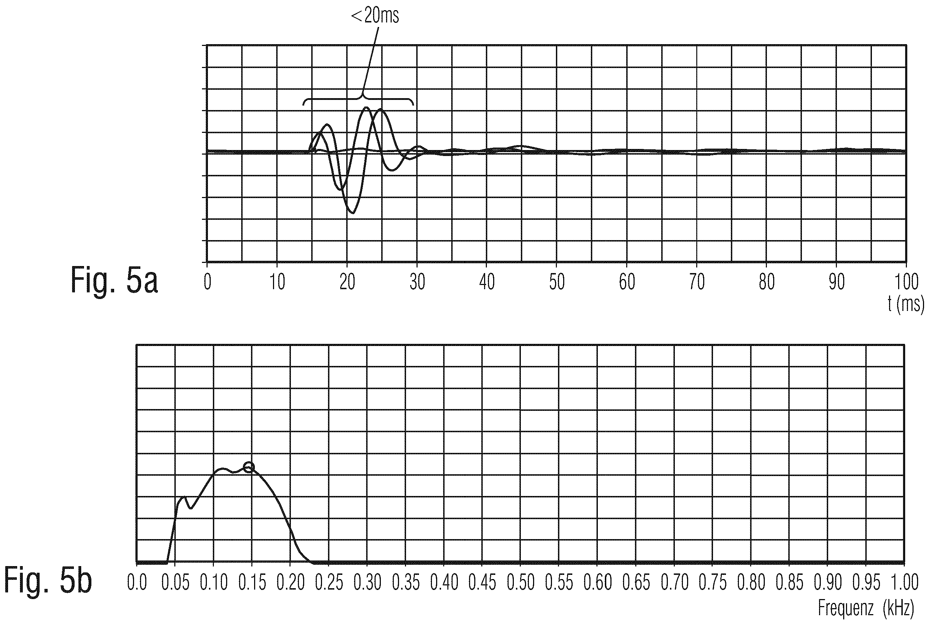

Dadurch, dass das Anregungssignal S(t) ein kontinuierliches und nicht diskretes Amplitudenspektrum aufweist, ist ein höherer Energieeintrag in das schwingende, durch die Eingabevorrichtung 1 dargestellte Gesamtsystem ermöglicht, wovon insbesondere eine Anregung mit einem elektrodynamischen Aktuator 4 profitiert. Dadurch, dass das Anregungssignal erfindungsgemäß so ausgelegt ist, dass die erste Eigenfrequenz f1 und die zweite Eigenfrequenz f2 jeweils in den Bandbreitenbereich um ein lokales Minimum des zugehörigen Amplitudenspektrums FFT(S(t)) fallen, wird die Schwingungsanregung in dem eigenfrequenznahen Bereich unterdrückt, was insbesondere ein nachhaltiges Nachschwingen des Betätigungsteils 2 und der Erregermasse 5 nach dem Abfall des elektrischen Anregungssignal S(t) und Stromlosstellen des Aktuators 4 minimiert. Zur Erläuterung soll ein Vergleich der Figuren 3a, 3b mit den Figuren 5a, 5b dienen.

Die Figur 3a zeigt die zeitlichen Verläufe der am Betätigungselement 2 bestimmten Auslenkung, der Geschwindigkeit und der Beschleunigung für eine nicht erfindungsgemäße Ausführungsform, bei der das Amplitudenspektrum des Anregungssignals keine lokalen Minima im Bereich der Eigenfrequenzen aufweist. Im Vergleich zur Figur 5a, die die zeitlichen Verläufe der am Betätigungselement 2 bestimmten Auslenkung, der Geschwindigkeit und der Beschleunigung für eine erfindungsgemäße Ausführungsform zeigt, ist in Figur 3a ein ausgedehntes Schwingverhalten mit einem lang andauernden, über die Zeitdauer t_{D} des Ansteuersignals S(t) hinausgehendes Nachschwingen zu beobachten, was dazu führt, dass die haptische Rückmeldung "verwässert". Die zugehörigen, beispielsweise durch schnelle Fourier-transformation aus dem Auslenkungsverlauf erhaltenen Amplitudenspektren sind in den Figuren 3b und 5b im Vergleich dargestellt. Es zeigt sich, dass neben der Verkürzung des Nachschwingens die lokalen Maxima im Amplitudenspektrum der nicht erfindungsgemäßen Lösung durch die erfindungsgemäße Auslegung des Anregungssignals S(t) im Amplitudenspektrum der erfindungsgemäßen Lösung weitgehend reduziert bzw. verschwunden sind, so dass das Schwingungsverhalten insbesondere Nachschwingverhalten der erfindungsgemäßen Lösung nicht durch die Eigenfrequenzanregung dominiert ist und die haptische Rückmeldung besser sensiert werden kann, da sie nicht durch spezifische Frequenzen dominiert ist.

## Patentansprüche

1. Eingabeverfahren mit einer haptischen Rückmeldung, aufweisend folgende Schritte:
Bereitstellen eines um eine Ruhelage in einer Schwingungsrichtung (b) schwingend gelagerten Betätigungselements (2) mit einer eine erste Eigenfrequenz (f1) aufweisenden Eigenmode;
Bereitstellen eines elektrodynamischen oder piezoelektrischen Aktuators (4) zur schwingungsanregenden Einwirkung in Schwingungsrichtung (b) auf das Betätigungselement (2) und damit zur Erzeugung der haptischen Rückmeldung, der eine freischwingend gelagerte, durch ein elektrisches Anregungssignal (S(t)) antreibbare Erregermasse (5) und eine eine zweite Eigenfrequenz (f2) aufweisende Aktuator-Eigenmode aufweist;
Bereitstellen von Erfassungsmitteln (6, 8) zum Erfassen wenigstens eines Beginns einer händischen Berührung und/oder Betätigung des Betätigungselements (2) und einer mit den Erfassungsmitteln (6, 8) elektrisch verbundenen Steuereinheit (12) zur Erzeugung des elektrischen Anregungssignals (S(t));
Erzeugen der haptischen Rückmeldung durch die Steuereinheit (12) durch Beaufschlagen des elektrodynamischen oder piezoelektrischen Aktuators (4) während oder nach Erfassen der Berührung und/oder Betätigung mit dem elektrischen Anregungssignal (S(t)), wobei dem elektrischen Anregungssignal (S(t)) ein kontinuierliches Amplitudenspektrum (FFT(S(t))) zugeordnet ist, und die zweite Eigenfrequenz (f2) in einen zweiten, ein zweites lokales Minimum umgebenden Bandbreitenbereich des Amplitudenspektrums (FFT(S(t))) fällt, **dadurch gekennzeichnet, dass** die erste Eigenfrequenz (f1) in einen ersten, ein erstes, lokales Minimum umgebenden Bandbreitenbereich des Amplitudenspektrums (FFT(S(t))) fällt und dass das Anregungssignal (S(t)) so ausgebildet ist, dass der elektrodynamische oder piezoelektrische Aktuator (5) nach Erreichen der Maximalauslenkung durch das Betätigungselement (2) und spätestens nach dem ersten Überschwingen der Ruhelage nach Erreichen der Maximalauslenkung durch das Betätigungselement (2) stromlos gestellt wird.

2. Eingabeverfahren nach Anspruch 1, wobei der erste Bandbreitenbereich des Amplitudenspektrums (FFT(S(t))) und der zweite Bandbreitenbereich des Amplitudenspektrums (FFT(S(t))) sich nicht überschneiden.

3. Eingabeverfahren nach dem vorhergehenden Anspruch, wobei eine erste Bandbreite des ersten Bandbreitenbereichs und/oder eine zweite Bandbreite des zweiten Bandbreitenbereichs durch zu dem jeweiligen Bandbreitenbereich gehörige untere und obere Grenzfrequenz bestimmt ist, die jeweils eine betragsmäßig 10 Hz betragende Abweichung von der Frequenz des jeweiligen lokalen Minimums aufweisen.

4. Eingabeverfahren nach einem der beiden vorhergehenden Ansprüche, wobei der Aktuator (4) ein elektrodynamischer Aktuator (4) ist und die zweite Bandbreite größer als eine halbe, die zweite Eigenfrequenz (f2) betreffende Resonanz-Halbwertsbreite des elektrodynamischen Aktuators (4) und kleiner als die sechsfache Resonanz-Halbwertsbreite des elektrodynamischen Aktuators (4) ist.

5. Eingabeverfahren nach einem der vorhergehenden Ansprüche, wobei das erste und zweite lokale Minimum jeweils durch einen mehr als 3 dB ausmachenden Abfall gegenüber einer Maximalamplitude im Amplitudenspektrum (FFT(S(t))) definiert sind.

6. Eingabeverfahren nach einem der vorhergehenden Ansprüche, wobei die Lagerung des Betätigungsteils (2) und die Lagerung der Erregermasse (5) so abgestimmt sind, dass die zweite Eigenfrequenz (f2) höher ist als die erste Eigenfrequenz (f1).

7. Eingabeverfahren nach einem der vorhergehenden Ansprüche, wobei das Anregungssignal (S(t)) so ausgebildet ist, dass der elektrodynamische oder piezoelektrische Aktuator (5) spätestens zu einem Zeitpunkt, an dem nach der Maximalauslenkung erstmalig eine Auslenkung unterschritten ist, die 1/10 der Maximalauslenkung des Betätigungsteils (2) ausmacht, stromlos gestellt wird.

8. Eingabevorrichtung (1) zum Erfassen einer händischen Eingabe mit haptischer Rückmeldung aufweisend: eines um eine Ruhelage in einer Schwingungsrichtung (b) schwingend gelagerten Betätigungselements (2) mit einer eine erste Eigenfrequenz (f1) aufweisenden Eigenmode;
einen elektrodynamischen oder piezoelektrischen Aktuator (4) zur schwingungsanregenden Einwirkung in Schwingungsrichtung (b) auf das Betätigungselement (2), der eine freischwingend gelagerte, durch ein elektrisches Anregungssignal (S(t)) antreibbare Erregermasse (5) und eine eine zweite Eigenfrequenz (f2) aufweisende Aktuator-Eigenmode aufweist;
Erfassungsmittel (6, 8) zum Erfassen wenigstens eines Beginns einer händischen Berührung und/oder Betätigung des Betätigungselements (2);
und eine mit den Erfassungsmitteln (6, 8) elektrisch verbundene Steuereinheit (12) zur Erzeugung des elektrischen Anregungssignals (S(t)) und Beaufschlagen des elektrodynamischen oder piezoelektrischen Aktuators (4) mit dem elektrischen Anregungssignal (S(t)) während oder nach Erfassen der Berührung und/oder Betätigung, wobei dem elektrischen Anregungssignal (S(t)) ein kontinuierliches Amplitudenspektrum (FFT(S(t))) zugeordnet ist, und die zweite Eigenfrequenz (f2) in einen zweiten, ein lokales, zweites Minimum umgebenden Bandbreitenbereich des Amplitudenspektrums (FFT(S(t))) fällt, **dadurch gekennzeichnet, dass** die erste Eigenfrequenz (f1) in einen ersten, ein lokales, erstes Minimum umgebenden Bandbreitenbereich des Amplitudenspektrums (FFT(S(t))) fällt und
dass das Anregungssignal (S(t)) so ausgebildet ist, dass der elektrodynamische oder piezoelektrische Aktuator (5) nach Erreichen der Maximalauslenkung durch das Betätigungselement (2) und spätestens nach dem ersten Überschwingen der Ruhelage nach Erreichen der Maximalauslenkung durch das Betätigungselement (2) stromlos gestellt wird.

9. Eingabevorrichtung (1) nach dem vorhergehenden Anspruch, wobei der erste Bandbreitenbereich des Amplitudenspektrums (FFT(S(t))) und der zweite Bandbreitenbereich des Amplitudenspektrums (FFT(S(t))) sich nicht überschneiden.

10. Eingabevorrichtung (1) nach dem vorhergehenden Anspruch, wobei eine erste Bandbreite des ersten Bandbreitenbereichs und/oder eine zweite Bandbreite des zweiten Bandbreitenbereichs durch zu dem jeweiligen Bandbreitenbereich gehörige untere und obere Grenzfrequenz bestimmt ist, die jeweils eine betragsmäßig 10 Hz betragende Abweichung von der Frequenz des jeweiligen lokalen Minimums aufweisen.

11. Eingabevorrichtung nach einem der beiden vorhergehenden Ansprüche, wobei der Aktuator (4) ein elektrodynamischer Aktuator (4) ist und die zweite Bandbreite größer als eine halbe, die zweite Eigenfrequenz (f2) betreffende Resonanz-Halbwertsbreite des elektrodynamischen Aktuators (4) und kleiner als die sechsfache Resonanz-Halbwertsbreite des elektrodynamischen Aktuators (4) ist.

12. Eingabevorrichtung (1) nach einem der vorhergehenden Ansprüche 8 bis 11, wobei das erste und zweite lokale Minimum jeweils durch einen mehr als 3 dB ausmachenden Abfall gegenüber einer Maximalamplitude im Amplitudenspektrum (FFT(S(t))) definiert sind.

13. Eingabevorrichtung (1) nach einem der vorhergehenden Ansprüche 8 bis 12, wobei die Lagerung des Betätigungsteils (2) und die Lagerung der Erregermasse (5) so abgestimmt sind, dass die zweite Eigenfrequenz (f2) höher ist als die erste Eigenfrequenz (f1).

14. Eingabevorrichtung (1) nach einem der vorhergehenden Ansprüche 8 bis 13, wobei das Anregungssignal (S(t)) so ausgebildet ist, dass der elektrodynamische oder piezoelektrische Aktuator (4) spätestens zu einem Zeitpunkt, an dem nach der Maximalauslenkung erstmalig eine Auslenkung unterschritten ist, die 1/10 der Maximalauslenkung des Betätigungsteils (2) ausmacht, stromlos gestellt wird.

## Claims

1. Input method with haptic feedback, comprising the following steps:
providing an actuating element (2) which is mounted so as to vibrate about a rest position in a vibration direction (b) and has an eigenmode having a first natural frequency (f1);
providing an electrodynamic or piezoelectric actuator (4) for acting on the actuating element (2) in a vibration-inducing manner in the vibration direction (b) and thus for generating the haptic feedback, which actuator has an exciter mass (5) which is mounted so as to vibrate freely and can be driven by an electric excitation signal (S(t)), and has an actuator eigenmode having a second natural frequency (f2);
providing detection means (6, 8) for detecting at least a start of manual touching and/or actuation of the actuating element (2) and a control unit (12), which is electrically connected to the detection means (6, 8), for generating the electric excitation signal (S(t));
generating the haptic feedback by way of the control unit (12) by applying the electric excitation signal (S(t)) to the electrodynamic or piezoelectric actuator (4) during or after detection of the touching and/or actuation, wherein a continuous amplitude spectrum (FFT(S(t))) is associated with the electric excitation signal (S(t)), and the second natural frequency (f2) falls within a second bandwidth range of the amplitude spectrum (FFT(S(t))) which surrounds a second local minimum, **characterized in that** the first natural frequency (f1) falls within a first bandwidth range of the amplitude spectrum (FFT(S(t))) which surrounds a first local minimum and **in that** the excitation signal (S(t)) is formed so that the electrodynamic or piezoelectric actuator (5) is de-energized after the actuating element (2) has reached the maximum deflection and, at the latest, after the actuating element (2) has reached the maximum deflection after the first overshooting of the rest position.

2. Input method according to Claim 1, wherein the first bandwidth range of the amplitude spectrum (FFT(S(t))) and the second bandwidth range of the amplitude spectrum (FFT(S(t))) do not overlap.

3. Input method according to the preceding claim, wherein a first bandwidth of the first bandwidth range and/or a second bandwidth of the second bandwidth range is determined by the lower and upper limit frequency associated with the respective bandwidth range, the lower and upper limit frequency each having a deviation of 10 Hz in terms of magnitude from the frequency of the respective local minimum.

4. Input method according to one of the two preceding claims, wherein the actuator (4) is an electrodynamic actuator (4) and the second bandwidth is greater than half a resonance full width at half maximum of the electrodynamic actuator (4), relating to the second natural frequency (f2), and less than six times the resonance full width at half maximum of the electrodynamic actuator (4).

5. Input method according to any one of the preceding claims, wherein the first and second local minimum are each defined by a decrease of more than 3 dB relative to a maximum amplitude in the amplitude spectrum (FFT(S(t))) .

6. Input method according to any one of the preceding claims, wherein the bearing of the actuating part (2) and the bearing of the exciter mass (5) are calibrated such that the second natural frequency (f2) is higher than the first natural frequency (f1).

7. Input method according to any one of the preceding claims, wherein the excitation signal (S(t)) is formed such that the electrodynamic or piezoelectric actuator (5) is de-energized, at the latest, at a time when, after the maximum deflection, a deflection constituting 1/10 of the maximum deflection of the actuating part (2) is undershot for the first time.

8. Input device (1) for detecting a manual input with haptic feedback comprising: an actuating element (2) which is mounted so as to vibrate about a rest position in a vibration direction (b) and has an eigenmode having a first natural frequency (f1);
an electrodynamic or piezoelectric actuator (4) for acting on the actuating element (2) in a vibration-inducing manner in the vibration direction (b), which actuator has an exciter mass (5) which is mounted so as to vibrate freely and can be driven by an electric excitation signal (S(t)), and an actuator eigenmode having a second natural frequency (f2);
detection means (6, 8) for detecting at least a start of manual touching and/or actuation of the actuating element (2);
and a control unit (12), which is electrically connected to the detection means (6, 8), for generating the electric excitation signal (S(t)) and applying the electric excitation signal (S(t)) to the electrodynamic or piezoelectric actuator (4) during or after detection of the touching and/or actuation, wherein a continuous amplitude spectrum (FFT(S(t))) is associated with the electric excitation signal (S(t)), and the second natural frequency (f2) falls within a second bandwidth range of the amplitude spectrum (FFT(S(t))) which surrounds a local second minimum, **characterized in that** the first natural frequency (f1) falls within a first bandwidth range of the amplitude spectrum (FFT(S(t))) which surrounds a local first minimum and **in that** the excitation signal (S(t)) is formed so that the electrodynamic or piezoelectric actuator (5) is de-energized after the actuating element (2) has reached the maximum deflection and, at the latest, after the actuating element (2) has reached the maximum deflection after the first overshooting of the rest position.

9. Input device (1) according to the preceding claim, wherein the first bandwidth range of the amplitude spectrum (FFT(S(t))) and the second bandwidth range of the amplitude spectrum (FFT(S(t))) do not overlap.

10. Input device (1) according to the preceding claim, wherein a first bandwidth of the first bandwidth range and/or a second bandwidth of the second bandwidth range is determined by the lower and upper limit frequency associated with the respective bandwidth range, the lower and upper limit frequency each having a deviation of 10 Hz in terms of magnitude from the frequency of the respective local minimum.

11. Input device according to one of the two preceding claims, wherein the actuator (4) is an electrodynamic actuator (4) and the second bandwidth is greater than half a resonance full width at half maximum of the electrodynamic actuator (4), relating to the second natural frequency (f2), and less than six times the resonance full width at half maximum of the electrodynamic actuator (4).

12. Input device (1) according to any one of preceding Claims 8 to 11, wherein the first and second local minimum are each defined by a decrease of more than 3 dB relative to a maximum amplitude in the amplitude spectrum (FFT(S(t))) .

13. Input device (1) according to any one of preceding Claims 8 to 12, wherein the bearing of the actuating part (2) and the bearing of the exciter mass (5) are calibrated such that the second natural frequency (f2) is higher than the first natural frequency (f1).

14. Input device (1) according to any one of preceding Claims 8 to 13, wherein the excitation signal (S(t)) is formed such that the electrodynamic or piezoelectric actuator (4) is de-energized, at the latest, at a time when, after the maximum deflection, a deflection constituting 1/10 of the maximum deflection of the actuating part (2) is undershot for the first time.

## Revendications

1. Procédé d'entrée avec rétroaction haptique comprenant les étapes suivantes :
mise à disposition d'un élément d'actionnement (2) monté de manière à osciller autour d'une position de repos dans une direction d'oscillation (b) et présentant un mode propre avec une première fréquence propre (f1) ;
mise à disposition d'un actionneur électrodynamique ou piézoélectrique (4) pour exercer une action d'excitation vibratoire dans la direction d'oscillation (b) sur l'élément d'actionnement (2) et ainsi générer la rétroaction haptique, lequel actionneur comprend une masse d'excitation (5) montée de manière à osciller librement et pouvant être entraînée par un signal d'excitation électrique (S[t]) et un mode propre de l'actionneur présentant une deuxième fréquence propre (f2) ;
mise à disposition de moyens de détection (6, 8) pour détecter au moins un début d'un contact manuel et/ou d'un actionnement de l'élément d'actionnement (2) et d'une unité de commande (12) reliée électriquement aux moyens de détection (6, 8) pour générer le signal d'excitation électrique (S[t]) ;
génération de la rétroaction haptique par l'unité de commande (12) en appliquant le signal d'excitation électrique (S[t]) à l'actionneur électrodynamique ou piézoélectrique (4) pendant ou après la détection du contact et/ou de l'actionnement, un spectre d'amplitude continu (FFT[S{t}]) étant associé au signal d'excitation électrique (S[t]), et la deuxième fréquence propre (f2) rentrant dans une deuxième plage de largeurs de bande du spectre d'amplitude (FFT[S{t}]) entourant un deuxième minimum local, **caractérisé en ce que** la première fréquence propre (f1) rentre dans une première plage de largeurs de bande du spectre d'amplitude (FFT[S{t}]) entourant un premier minimum local et **en ce que** le signal d'excitation (S[t]) est conçu de telle sorte que l'actionneur électrodynamique ou piézoélectrique (5) est mis hors tension après avoir atteint la déviation maximale par l'élément d'actionnement (2) et au plus tard après le premier dépassement de la position de repos après avoir atteint la déviation maximale par l'élément d'actionnement (2).

2. Procédé d'entrée selon la revendication 1, dans lequel la première plage de largeurs de bande du spectre d'amplitude (FFT[S{t}]) et la deuxième plage de largeurs de bande du spectre d'amplitude (FFT[S{t}]) ne se chevauchent pas.

3. Procédé d'entrée selon la revendication précédente, dans lequel une première largeur de bande de la première plage de largeurs de bande et/ou une deuxième largeur de bande de la deuxième plage de largeurs de bande est déterminée par des fréquences de coupure inférieure et supérieure appartenant à la plage de largeurs de bande respective, qui présentent chacune un écart de 10 Hz par rapport à la fréquence du minimum local respectif.

4. Procédé d'entrée selon l'une des deux revendications précédentes, dans lequel l'actionneur (4) est un actionneur électrodynamique (4) et la deuxième largeur de bande est supérieure à la moitié de la largeur à mi-hauteur de la résonance de l'actionneur électrodynamique (4) concernant la deuxième fréquence propre (f2) et inférieure à six fois la largeur à mi-hauteur de la résonance de l'actionneur électrodynamique (4).

5. Procédé d'entrée selon l'une des revendications précédentes, dans lequel le premier et le deuxième minimum local sont chacun définis par une chute de plus de 3 dB par rapport à une amplitude maximale dans le spectre d'amplitude (FFT[S{t}]).

6. Procédé d'entrée selon l'une des revendications précédentes, dans lequel le montage de la pièce d'actionnement (2) et le montage de la masse d'excitation (5) sont coordonnés de telle sorte que la deuxième fréquence propre (f2) est supérieure à la première fréquence propre (f1).

7. Procédé d'entrée selon l'une des revendications précédentes, dans lequel le signal d'excitation (S[t]) est conçu de telle sorte que l'actionneur électrodynamique ou piézoélectrique (5) est mis hors tension au plus tard à un moment où, après la déviation maximale, une déviation inférieure à 1/10 de la déviation maximale de la pièce d'actionnement (2) est atteinte pour la première fois.

8. Dispositif d'entrée (1) pour détecter une entrée manuelle avec rétroaction haptique, comprenant : un élément d'actionnement (2) monté de manière à osciller autour d'une position de repos dans une direction d'oscillation (b) et présentant un mode propre avec une première fréquence propre (f1) ;
un actionneur électrodynamique ou piézoélectrique (4) pour exercer une action d'excitation vibratoire dans la direction d'oscillation (b) sur l'élément d'actionnement (2), lequel actionneur comprend une masse d'excitation (5) montée de manière à osciller librement et pouvant être entraînée par un signal d'excitation électrique (S[t]) et un mode propre de l'actionneur présentant une deuxième fréquence propre (f2) ;
des moyens de détection (6, 8) pour détecter au moins un début d'un contact manuel et/ou d'un actionnement de l'élément d'actionnement (2) ;
et une unité de commande (12) reliée électriquement aux moyens de détection (6, 8) pour générer le signal d'excitation électrique (S[t]) et appliquer le signal d'excitation électrique (S[t]) à l'actionneur électrodynamique ou piézoélectrique (4) pendant ou après la détection du contact et/ou de l'actionnement, un spectre d'amplitude continu (FFT[S{t}]) étant associé au signal d'excitation électrique (S[t]), et la deuxième fréquence propre (f2) rentrant dans une deuxième plage de largeurs de bande du spectre d'amplitude (FFT[S{t}]) entourant un deuxième minimum local, **caractérisé en ce que** la première fréquence propre (f1) rentre dans une première plage de largeurs de bande du spectre d'amplitude (FFT[S{t}]) entourant un premier minimum local et **en ce que** le signal d'excitation (S[t]) est conçu de telle sorte que l'actionneur électrodynamique ou piézoélectrique (5) est mis hors tension après avoir atteint la déviation maximale par l'élément d'actionnement (2) et au plus tard après le premier dépassement de la position de repos après avoir atteint la déviation maximale par l'élément d'actionnement (2).

9. Dispositif d'entrée (1) selon la revendication précédente, dans lequel la première plage de largeurs de bande du spectre d'amplitude (FFT[S{t}]) et la deuxième plage de largeurs de bande du spectre d'amplitude (FFT[S{t}]) ne se chevauchent pas.

10. Dispositif d'entrée (1) selon la revendication précédente, dans lequel une première largeur de bande de la première plage de largeurs de bande et/ou une deuxième largeur de bande de la deuxième plage de largeurs de bande est déterminée par des fréquences de coupure inférieure et supérieure appartenant à la plage de largeurs de bande respective, qui présentent chacune un écart absolu de 10 Hz par rapport à la fréquence du minimum local respectif.

11. Dispositif d'entrée selon l'une des deux revendications précédentes, dans lequel l'actionneur (4) est un actionneur électrodynamique (4) et la deuxième largeur de bande est supérieure à la moitié de la largeur à mi-hauteur de la résonance de l'actionneur électrodynamique (4) correspondant à la deuxième fréquence propre (f2) et inférieure à six fois la largeur à mi-hauteur de la résonance de l'actionneur électrodynamique (4).

12. Dispositif d'entrée (1) selon l'une des revendications 8 à 11 précédentes, dans lequel le premier et le deuxième minimum local sont chacun définis par une chute de plus de 3 dB par rapport à une amplitude maximale dans le spectre d'amplitude (FFT[S{t}]).

13. Dispositif d'entrée (1) selon l'une des revendications 8 à 12 précédentes, dans lequel le montage de la pièce d'actionnement (2) et le montage de la masse d'excitation (5) sont coordonnés de telle sorte que la deuxième fréquence propre (f2) est supérieure à la première fréquence propre (f1).

14. Dispositif d'entrée (1) selon l'une des revendications précédentes 8 à 13, dans lequel le signal d'excitation (S[t]) est conçu de telle sorte que l'actionneur électrodynamique ou piézoélectrique (4) est mis hors tension au plus tard à un moment où, après la déviation maximale, une déviation inférieure à 1/10 de la déviation maximale de la pièce d'actionnement (2) est atteinte pour la première fois.
